**Europäisches Patentamt**

**European Patent Office**

**Office européen des brevets**

(19)

(11) Publication number: **0 020 030**
**A1**

# (12) EUROPEAN PATENT APPLICATION

(21) Application number: **80301444.8**

(22) Date of filing: **01.05.80**

(51) Int. Cl.³: **G 01 G 23/01,** G 01 G 11/04,
G 01 G 3/14

(30) Priority: **11.05.79 GB 7916393**

(71) Applicant: **Vacuumatic Limited, Harwich, Essex,
CO12 4LP (GB)**

(43) Date of publication of application: **10.12.80**
**Bulletin 80/25**

(72) Inventor: **Jones, Clive Hedley, Ruskins, Rectory Road,
Wrabness, Manningtree,Essex (GB)**

(84) Designated Contracting States: **AT BE CH DE FR GB IT
LI LU NL SE**

(74) Representative: **BAYLISS, Geoffrey Cyril et al, BOULT,
WADE & TENNANT 27 Furnival Street, London EC4A 1PQ
(GB)**

(54) **Weigh head assembly of a load cell and a calibration unit.**

(57)  The weigh head assembly disclosed comprises a base member 10 on which a cantilever beam 25 is mounted for bearing strain gauges 26 connected in conventional circuitry for measuring the bending of the beam. Two parallel links 13, 14 are pivotally mounted at vertically spaced locations on the upright base member 10 and are connected together by a bridging member 19 to which the free end of the cantilever beam 25 is connected. Loads to be weighed are imposed on the upper end of the bridging member 19 through a mechanism not shown. A plate 31 is attached to the sides of the bridging member 19 and carries pairs of projecting studs 40, 41 and 42, 43 from which test weights 47, 55, can be temporarily deposited together or sequentially in order to test and calibrate the weigh head assembly. The test weights are normally supported on pivotal platforms 44, 56 which can be lowered to deposit the weights on the studs for a test weighing by solenoids 53, 62. In order to eliminate the possibility of errors caused by the application of bending moments to the cantileverbeam by the test weights 47, 55, the strain gauge beam 25 is connected to the bridge member 19 equidistantly between the parallel links 14, 15.

ACTORUM AG

**TITLE MODIFIED**
see front page

"IMPROVEMENTS IN OR RELATING WEIGH HEAD ASSEMBLIES"

This invention relates to weigh head assemblies particularly although not exclusively for use in automatic weighing apparatus built into conveyor lines such as described in U.K. Patent Nos:1522201 and 1522202 and U.K. Patent Application Nos.35364/76 and Cognate No. 6200/77.

The invention provides a weigh head assembly comprising a support structure, a cantilever beam mounted on the structure, strain gauge means on the beam to respond to deflection of the beam in accordance with an applied load, a linkage for transmitting a load to the beam comprising a pair of equal length parallel links pivotally mounted on the support equidistantly above and below the beam and a further link pivotally connected to the free ends of the pair of links and to the beam to transmit a load imposed on the linkage to the beam to bend the beam, a bridging member mounted on the further link at locations equidistantly above and below the connection of the beam, and means to apply and to remove a test weight or weights to the bridging member to provide a check weighing or weighings.

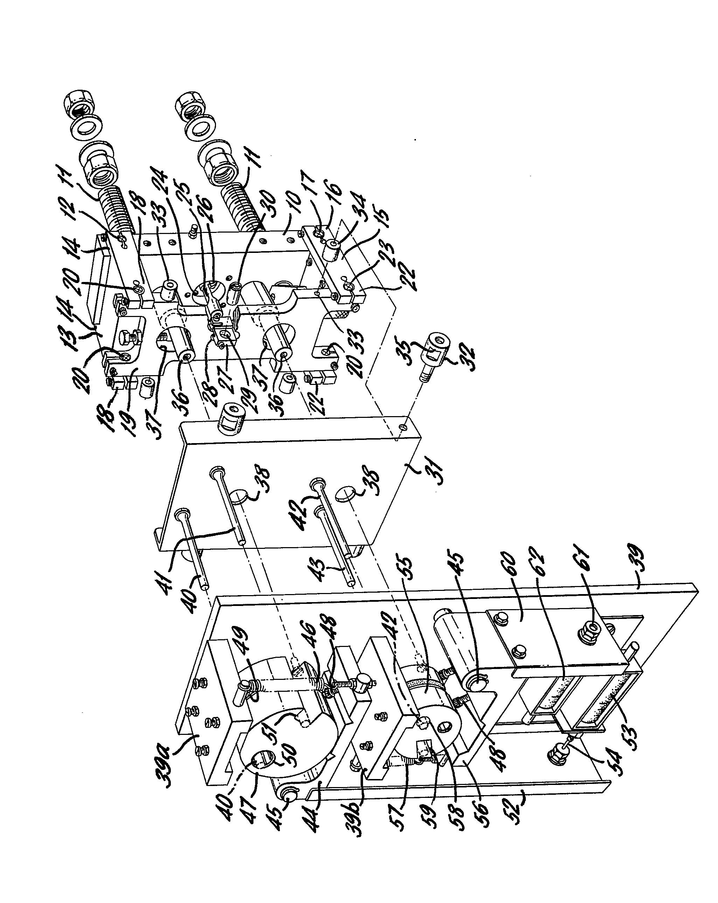

The following is a description of a specific embodiment of the invention, reference being made to the accompanying drawing which is a perspective view of part of a weigh head assembly for an automatic weighing apparatus.

The weigh head assembly illustrated in the drawing forms part of an automatic weighing apparatus to be built into a conveyor line for articles to be weighed such as described in our U.K. Patent Nos:1522201 and 1522202 and U.K. Patent Application Nos:35364/76 and Cognate 6200/77.

The weigh head assembly comprises an upright base member 10 having upper and lower studs 11 projecting from the rearward side thereof for mounting the base member on the frame of the weighing apparatus.

Two low friction pivots 12, for example flexural pivots, project from either side of the upper end of the base 10 and an arm 13 has two projecting ears 14 at one end which receive the pivots 12 to pivotally mount the arm 13 about a horizontal axis with repect to the base. At the lower end of the base 10 there is a similar arm 15 having projecting ears 16 at one end which receive low friction pivots 17 of the same type as pivots 12 projecting from either side of the lower end of the base 10 to support the arm 15 for pivotal movement about a horizontal axis with respect to the base.

The arm 13 has, at the opposite end to the ears 14, two further projecting ears 18 which receive between them the upper end of a vertical bridging member 19. The bridging member has low friction pivots 20 again of the same type as pivots 12 projecting from either side thereof which are received in the ears 18 so that the upper end of the bridging member 19 is pivotally supported by the arm 13. The lower arm 15 has similar projecting ears 22 which receive low friction pivots 23 of the same type as pivots 12 projecting from either side of the lower end of the bridging member 19. The arms 13 and 15 are of equal length so that the bridging member 19 is constrained to move parallel to the base 10.

Midway down the base member 10 there is an aperture 24 from which a strain gauge beam 25 projects which is mounted in cantilever manner at the back of the base. The beam has strain gauges one of which in indicated at 26 mounted on the beam and connected to a conventional strain gauge circuit for measuring bending of the beam.

The free end of the strain gauge beam 26 is fixed to a shoe 27 located in a slot 28 in the bridging member 19. The shoe has a bore 29 in which a low friction pivot 30 extending across the slot and mounted at its ends in the bridging member 19 engages. The axis of the low friction pivot 30 is parallel to the axes of the pivots 20 and 23 and lies in a plane containing the pivots 20 and 23 which is parallel to the base 10. Thus downward movement of the bridging member 19 will apply pure bending moment to the strain gauge beam 25.

A shallow vertically extending channel section plate 31 is mounted on the bridging member 19 by means of headed studs 32 which extend through holes drilled adjacent the upper and lower ends of the side walls of the plate 31. The bridging member 19 is formed with upper and lower screw threaded bores on either side of the bridging member 19 and spaced equidistantly above and below the centre of the bridging member. The studs 32 are screwed into the bores 33 with spacer tubes 34 between the side walls of the plate 31 and the sides of the bridging member 19.

The heads of the bolts 32 have side slots 35 and provide mounting points for the frame of a weigh pan (not shown) on which the articles to be weighed are received. The weight of the articles is transmitted through the plate 31 to the bridging member 19 which applies a bending moment to the strain gauge beam 25 the deflection of which is measured by the strain gauges. The resulting change in current flowing through the strain gauges is measured by the associated circuit and the weight computed and indicated on a display.

Two rigid horizontally extending posts 36 are mounted at vertically spaced locations on the forward side of the base 10 and extend with clearance through apertures 37 in the bridging member 19 and apertures 38 in the plate 31. A vertical carrier plate 39 is rigidly mounted on the ends of the posts with adequate clearance for vertical movement of the plate 31. The plate 31 has a pair of horizontally extending rods 40, 41 rigidly mounted on the plate adjacent the upper end thereof at locations spaced across the plate with one rod 40 spaced slightly above the other 41. The rods pass with clearance through apertures in the carrier plate 39 the clearance being sufficient to ensure that the full up and down movement of the plate 31 is not impeded. The plate 31 has a similar pair of rigid rods 42, 43 mounted adjacent the lower end of the plate and projecting through corresponding apertures in the carrier plate 39.

The carrier plate carries a first upper platform 44 pivotally mounted on a pivot pin 45 at one end of the platform. The other end of the platform is supported by means of a tension spring 46 connected between the platform and an anchor plate 39a mounted at the top of the carrier plate. The platform 44 supports a cylindrical weight 47 which is located on the platform by means of upwardly projecting fulcrums 48 spaced across the platform which engage in an encircling groove 49 on the weight. The weight 47 has a bore 50 adjacent the periphery of the weight to one side of the weight which receives,with clearance, the rigid rod 40 and, on the other side of the weight, has a slot 51 which receives the other rigid rod 41. The clearance of the rods 40, 41 from the bore 50 and slot 51 in the weight is such that when the platform 44 is in the upper position as shown, the rods 40, 41 can move downwardly with downward movement of the plate 31 when an article is loaded on the weight carrier to be weighed without fouling the weight 47.

A downwardly extending lever arm 52 is connected to the platform adjacent the pivot 45. A solenoid 53 is mounted adjacent the lower end of the carrier plate 39 and has a projecting armature 54 which is rigidly attached to the lower end of the arm 52. Energising of the solenoid 53 extends the armature 54 which pivots the platform 44 downwardly against the action of the spring 46 and thus lowering the weight 47 onto the rods 40 and 41. The arrangement is such that the weight first engages on the rod 40 and then rolls around the rod 40 until the rod 41 engages the underside of the slot 51 so that the weight is supplied smoothly to the rods and does not bounce. When the armature 54 is fully extended, the fulcrums 48 are disengaged from the underside of the weight and the full load of the weight is taken on the arms 40, 41.

A second weight 55 is similarly mounted on a platform 56 supported by a tension spring 57 attached to an anchor plate 39b mounted on the carrier plate 39. The weight 55 has a bore 58 for the rod 42 and a slot 59 for the rod 43 similar to those described in the weight 47 above.   Likewise the platform has a downwardly extending lever arm 60 connected to the armature 61 of a solenoid 62 for pivoting the platform 56 downwardly against the action of the spring 57 to leave the weight 55 supported on the rods 42, 43.

The weights 47 and 55 are test weights to enable a test weighing operation to be carried out on the weigh head to check the calibration of the system.   Release of one or both of the weights 47, 55 onto the respective rods of the carrier plate 31 will apply a load to the bridging member and hence to the strain gauge beam 24 so that the performance of the weighing apparatus can be compared with the known values of the weights 47 and 55.   A test programme can be carried out comprising a readout with no weight applied, a readout with the weight 55 only applied and a readout with weight 47 only applied and a readout with both the weights 47 and 55 applied.   The results give not only an indication of the accuracy of measurement of the individual and combined weights but can also be plotted to give an indication of the linearity of the weighing system with increasing weight.

It will be appreciated that the weights, 47, 55 are supported in cantilever manner on the rods 42, 43 on the plate 31 and thus apply a turning moment about a horizontal axis to the plate as well as a downward load on the plate. Since the plate 31 is mounted symmetrically on the bridging member 19 about the axis of the pivot 30, that turning moment does not impart any load to the strain gauge beam 25 which is therefore deflected only by the downward load imposed by the weights.    Thus any possible source of error in the measurement derived by the bending of the strain gauge beam due to the cantilever loading of the weights is eliminated.

0020030

CLAIMS:

1. A weigh head assembly comprising a support structure (10), a cantilever beam (25) mounted on the structure, strain gauge means (26) on the beam to respond to deflection of the beam in accordance with an applied load, a linkage (13, 15, 19) for transmitting a load to the beam (25), and means to apply and to remove a test weight or weights ( 47,55) to the linkage (13,15,19) to provide a check weighing or weighings characterised in that the linkage comprises a pair of equal length parallel links (13,15) pivotally mounted on the support (10) equidistantly above and below the beam (25), a further link (19) pivotally connected to the free ends of the pair of links (13,15) and to the beam (25) to transmit a load imposed on the linkage to the beam to bend the beam, and a bridging member (31) mounted on the further link (19) at locations equidistantly above and below the connection of the beam (25) to which the test weights (47,55) are applied by said means (53,62).

2. A weigh head assembly as claimed in claim 1 wherein two weights (47,55) of differing values are provided and the assembly further includes means (53,62) for applying one or other or both weights to the bridging member (31) to provide three differing test weighings.

3. A weigh head assembly as claimed in claim 1 or claim 2 wherein the bridging member (31) has horizontally projecting weight support means (40, 41: 42,43) for the or each test weight (47,55) and means (44,52,53,46 : 56, 60, 62,57) are provided for releasing the or each test weight (47,55) onto the support means for a test weighing and raising the test weight from the support.

4. A weigh head assembly as claimed in claim 3 wherein a movable platform (44,56) is provided for the or each weight (47,55) together with means (46, 52, 53 : 57,60,62) for raising and lowering the platform to engage and release the weight with the weight platform.

5. A weigh head assembly as claimed in claim 4 wherein spring means (46,57) are provided for raising the or each platform (44,56) and a relay mechanism (53, 62) is provided for lowering the or each platform.

6. A weigh head assembly as claimed in claim 5 wherein the weight support means for the or each weight (47, 55) comprise a pair of parallel members (40,41:42,43) projecting laterally from the bridging member (31), the or each weight having a pair of spaced holes (50,51 : 58,59) through which the arms extend with clearance to permit the weight to be raised from or engaged on the arms for a test weighing.

7. A weigh head assembly as claimed in claim 5 or claim 6 wherein the or each platform (44,56) is pivotally mounted (45), spring means (46,57) being provided to raise the platform (44, 56) underneath weight (47, 55) to raise the weight from the weight support means (40,41 : 42,43) and the or each relay mechanism (53, 62) being arranged to lower the or each platform (44,56) against the action of the spring means to deposit the weight on the weight support means.

8. A weigh head assembly as claimed in any of the preceding claims wherein the bridging member (31) comprises a vertically extending channel section member, the side walls of which receive between them said further link (19), the side walls being fixed (32) to the further link of locations (33) spaced equidistantly above and below the connection of the link (19) to the beam (25) and the base of the channel section member having a support or supports (40, 41: 42,43) to receive the test weight or weights.

GCB/LB/SH/EA129

0020030

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | US - A - 3 994 161 (T.A. TROZERA)<br><br>* Abstract; figures *<br>-- | 1 | G 01 G 23/01<br>11/04<br>3/14 |
| | US - A - 3 805 604 (A.N. ORMOND)<br><br>* Abstract; figures *<br>-- | 1 | |
| | FR - A - 2 364 441 (NATIONAL CON-<br>TROLS, INC.)<br><br>* Claims; figures *<br>---- | 1 | |

**TECHNICAL FIELDS SEARCHED (Int.Cl. ³)**

F 01 G 23/01
       11/00
       11/04
       21/24
       21/26
       3/14
       3/08
G 01 L 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20.08.1980 | VAN ASSCHE |

EPO Form 1503.1   06.78